(19) **Europäisches Patentamt / European Patent Office / Office européen des brevets**

(11) **EP 3 995 264 B1**

(12) **FASCICULE DE BREVET EUROPEEN**

(45) Date de publication et mention de la délivrance du brevet:
**25.10.2023 Bulletin 2023/43**

(21) Numéro de dépôt: **21205997.6**

(22) Date de dépôt: **02.11.2021**

(51) Classification Internationale des Brevets (IPC):
**B25J 9/16** (2006.01)

(52) Classification Coopérative des Brevets (CPC):
**B25J 9/1612;** B25J 9/161; G05B 2219/39271; G05B 2219/39486; G05B 2219/39542

(54) **METHODE DE GENERATION DE DONNEES POUR LA COMMANDE D'UN PREHENSEUR D'UN SYSTEME ROBOTISE**

**METHODE ZUR DATENGENERIERUNG FÜR DIE STEUERUNG EINES GREIFERS EINES ROBOTISIERTEN SYSTEMS**

**DATA GENERATION METHOD FOR CONTROLLING A GRIPPER OF A ROBOTISED SYSTEM**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.11.2020 FR 2011310**

(43) Date de publication de la demande:
**11.05.2022 Bulletin 2022/19**

(73) Titulaire: **Commissariat à l'Energie Atomique et aux Energies Alternatives
75015 Paris (FR)**

(72) Inventeurs:
• **ROLINAT, Clément**
  **91190 Gif Sur Yvette (FR)**
• **ALOUI, Saifeddine**
  **38000 Grenoble (FR)**
• **GODIN, Christelle**
  **38420 Le Versoud (FR)**
• **GROSSARD, Mathieu**
  **91370 Verrieres Le Buisson (FR)**

(74) Mandataire: **Atout PI Laplace
Immeuble "Visium"
22, avenue Aristide Briand
94117 Arcueil Cedex (FR)**

(56) Documents cités:
• **MANDLEKAR AJAY ET AL: "IRIS: Implicit Reinforcement without Interaction at Scale for Learning Control from Offline Robot Manipulation Data", 2020 IEEE INTERNATIONAL CONFERENCE ON ROBOTICS AND AUTOMATION (ICRA), IEEE, 31 mai 2020 (2020-05-31), pages 4414-4420, XP033826274, DOI: 10.1109/ICRA40945.2020.9196935 [extrait le 2020-09-14]**
• **MURALI ADITHYAVAIRAVAN ET AL: "6-DOF Grasping for Target-driven Object Manipulation in Clutter", 2020 IEEE INTERNATIONAL CONFERENCE ON ROBOTICS AND AUTOMATION (ICRA), IEEE, 31 mai 2020 (2020-05-31), pages 6232-6238, XP033826654, DOI: 10.1109/ICRA40945.2020.9197318**
• **MOUSAVIAN ARSALAN ET AL: "6-DOF GraspNet: Variational Grasp Generation for Object Manipulation", 2019 IEEE/CVF INTERNATIONAL CONFERENCE ON COMPUTER VISION (ICCV), IEEE, 27 octobre 2019 (2019-10-27), pages 2901-2910, XP033723979, DOI: 10.1109/ICCV.2019.00299**
• **TADANOBU INOUE ET AL: "Transfer learning from synthetic to real images using variational autoencoders for robotic applications", ARXIV.ORG, CORNELL UNIVERSITY LIBRARY, 201 OLIN LIBRARY CORNELL UNIVERSITY ITHACA, NY 14853, 20 septembre 2017 (2017-09-20), XP080821980,**

• **CHARLES R QI ET AL: "PointNet++: Deep Hierarchical Feature Learning on Point Sets in a Metric Space", 31ST CONFERENCE ON NEURAL INFORMATION PROCESSING SYSTEMS (NIPS 2017), LONG BEACH, CA, USA, 1 janvier 2017 (2017-01-01), pages 1-10, XP055713540,**

## Description

### Domaine technique

La présente invention concerne une méthode de génération de données pour la commande d'un préhenseur d'un système robotisé ainsi qu'un procédé pour la commande d'un tel préhenseur à partir desdites données de commande et un système robotisé comprenant ledit préhenseur.

### Technique antérieure

Les opérations automatiques de prise et de dépose d'objets nécessitent l'utilisation de préhenseurs particulièrement adaptés aux différentes exigences opérationnelles. Ces opérations sont, par exemple, des opérations dites de « pick & place » dans des boîtes de conditionnement ou sur des convoyeurs. On rencontre généralement plusieurs types de problèmes techniques lors de la saisie et de la dépose d'un objet. Un première problème à surmonter est la précision du positionnement du préhenseur par rapport à l'objet et la connaissance de l'erreur de positionnement. La garantie de prise n'est pas optimale excepté si le préhenseur, ainsi que le système robotisé auquel il appartient, sont très précis. Cela conduit généralement à des coûts d'investissements importants. Un second problème est la coordination entre la phase d'approche et le déclenchement de la prise de l'objet. Une mauvaise coordination conduit à un nombre important de mauvaises prises ou de détérioration de produits et réduit ainsi le rendement d'une ligne de production. La grande variabilité des produits à manipuler pose également un autre problème. En effet, il faut s'adapter aux différentes rigidités et formes possibles de l'objet à prendre, ce qui impose des modifications importantes du préhenseur, voire un préhenseur différent pour chaque catégorie d'objet. Enfin, un dernier problème est d'ordre énergétique. Le système robotisé est souvent limité à des charges utiles assez faibles alors que le préhenseur est souvent composé d'une pluralité d'actionneurs nécessitant un approvisionnement en énergie externe (par exemple de l'air comprimé). Le poids supplémentaire généré par les dispositifs d'apport de cette énergie externe ajoute de l'inertie et limite la dynamique du système robotisé et donc l'efficacité de la ligne de production.

Le document WO2019105637 divulgue un préhenseur comportant un support et une pluralité de doigts mobiles par rapport audit support pour prendre un objet. Dans une phase d'approche du préhenseur vers l'objet, les doigts sont en position ouverte. La mise en contact d'un élément de déclenchement, de type plaque bistable, avec l'objet provoque un déplacement des doigts mobiles qui se referment alors sur ledit objet. Bien que ce préhenseur autorise une manipulation d'objets fragiles aux formes diverses sans nécessité d'apport d'énergie externe, il ne permet pas d'améliorer la planification de prise pour le préhenseur. En effet, une réaction du préhenseur n'est obtenue que lorsque celui-ci est à proximité immédiate de l'objet. L'espace d'exploration du préhenseur est donc limité à une zone très proche de l'objet, ce qui ne permet pas de déterminer l'approche la plus adéquate pour une bonne prise de l'objet.

On cherche aujourd'hui à améliorer la planification de la prise par le préhenseur en explorant l'espace de prise afin de trouver, dans cet espace, des prises de bonne qualité. C'est un problème complexe et un sujet de recherche encore ouvert pour deux raisons principales :

-    l'espace est de grande dimension, du fait des nombreux degrés de liberté du préhenseur se trouvant au bout d'un bras robotique ;
-    l'espace est très contraint, du fait des contraintes géométriques et cinématiques du bras et du préhenseur, du sous-actionnement du préhenseur, de la forme de l'objet à saisir, etc...

Le document « Learning from humans how to grasp : A data-driven architecture for autonomous grasping with anthropomorphic soft hands, » IEEE Robotics and Automation Letters, vol.4, no. 2, pp. 1533-1540, 2019 de C.D. Santina, V. Arapi, G.Averta, F. Damiani, G. Fiore, A. Settimi, M. G. Catalano, D. Bacciu, A. Bicchi, et M. Bianchi, décrit une méthode pour améliorer les stratégies de prise d'un objet. Cette méthode s'appuie sur l'observation du comportement humain pour prendre l'objet. Pour chaque configuration de positionnement de l'objet, une caméra vient enregistrer le déplacement d'une main humaine saisissant l'objet. Cette main est également équipée de capteurs de mesure inertielle à l'extrémité des ongles pour détecter les contacts avec l'objet. Des données de base d'un nombre limité de possibilités de prise de l'objet sont alors collectées par cette observation de mouvements humains. Ces données de base viennent ensuite alimenter un réseau de neurones. Une fois l'apprentissage de ce réseau de neurones réalisé à partir des données de base, celui-ci est utilisé pour prédire l'action qu'un être humain accomplirait pour atteindre un objectif de prise d'un objet, dans une configuration de positionnement donnée. Le nombre de prises réalisées par l'être humain enregistré est ici limité à une dizaine. L'espace exploré autour de l'objet est alors limité à une pluralité de points n'ayant pas réellement de liens entre eux. En conséquence, la qualité de prise de l'objet par le préhenseur via le réseau de neurones est faible. En outre, dans le cas d'objets à géométrie complexe, la méthode de l'art antérieur a des capacités d'adaptation limitées. Celle-ci ne cherche pas à maximiser la qualité de prise. Dès lors, les prises d'un tel préhenseur utilisant cette méthode présentent une qualité non optimisée.

Le document MURALI ADITHYAVAIRAVAN ET AL: "6-DOF Grasping for Target-driven Object Manipulation in Clutter", 2020 IEEE INTERNATIONAL CONFERENCE ON ROBOTICS AND AUTOMATION (ICRA), IEEE, 31 May 2020, pages 6232 - 6238, XP033826654, DOI: 10.1109/ICRA40945.2020.9197318, et le document MANDLEKAR AJAY ET AL: "IRIS: Implicit Reinforcement without Interaction at Scale for Learning Control from Offline Robot Manipulation Data", 2020 IEEE INTERNATIONAL CONFERENCE ON ROBOTICS AND AUTOMATION (ICRA), IEEE, 31 May 2020, pages 4414 - 4420, XP033826274, DOI: 10.1109/ICRA40945.2020.9196935, divulguent l' application des auto-encodeurs variationnels à la génération de données pour la commande d'un préhenseur d'un système robotisé.

Il existe donc un besoin d'améliorer l'exploration de l'espace de prise autour d'un objet à prendre afin d'améliorer la commande d'un système robotisé pour la prise de cet objet.

## Exposé de l'invention

La présente invention vise à remédier au moins en partie à ce besoin.

Plus particulièrement, la présente invention vise à améliorer la prise d'un objet par un préhenseur d'un système robotisé.

Un premier objet de l'invention concerne une méthode de génération de données pour la commande d'un préhenseur d'un système robotisé, ledit préhenseur comportant un support et au moins deux doigts mobiles par rapport audit support pour prendre un objet, ladite méthode comprenant :

- une étape de collecte de données de base d'un nombre limité de possibilités de prises dudit objet réalisées par un être humain;
- une première étape de génération pour la génération de données supplémentaires à partir desdites données de base, ladite première étape de génération étant réalisée par un premier auto-encodeur variationnel ;
- une étape de tri des données de base et des données supplémentaires pour constituer un ensemble de données triées, ladite étape de tri étant réalisée à partir d'un critère de qualité de la prise d'objet ;
- un seconde étape de génération de données pour la génération de données de commande à partir des données triées, ladite seconde étape de génération étant réalisée par un second auto-encodeur variationnel.

La méthode de génération de données permet d'explorer l'espace des prises possibles en se concentrant autour de prises réalisées par un être humain. On profite ainsi de la capacité humaine à trouver facilement des configurations de prises efficaces. Il y alors plus de flexibilité dans la réduction de l'espace de recherche. L'utilisateur d'auto-encodeurs variationnels à différents niveaux permet d'explorer et de représenter l'espace des prises et d'y associer une qualité de prise analytique. Un auto-encodeur est un réseau de neurones artificiels utilisé pour l'apprentissage non supervisé de caractéristiques discriminantes. Un auto-encodeur variationnel fait des hypothèses fortes concernant la distribution des variables latentes. Il utilise l'approche variationnelle pour l'apprentissage de la représentation latente, ce qui se traduit par une composante de perte additionnelle et un algorithme d'apprentissage spécifique. Les auto-encodeurs variationnels permettent d'extraire les corrélations existantes entre les paramètres de configuration des prises afin de créer une représentation compacte des données dans un espace latent. Echantillonner des valeurs dans cet espace permet ensuite de générer de façon fiable des nouvelles prises semblables aux prises des données de base servant d'apprentissage, tout en prédisant leur qualité.

Dans un mode de réalisation particulier, les données de base, les données supplémentaires, les données triées et les données de commande comportent une pluralité de paramètres, lesdits paramètres étant choisis parmi une liste de paramètres comprenant :

- des paramètres de position ;
- des paramètres d'orientation ;
- une configuration de l'objet pour sa prise.

Dans un mode de réalisation particulier, le critère de qualité de la prise d'objet est fonction de caractéristiques géométriques des points de contact entre le préhenseur et ledit objet.

Dans un mode de réalisation particulier, l'étape de tri est réalisée à partir d'un simulateur adapté pour générer une cinématique du préhenseur du système robotisé et des collisions de ce préhenseur avec l'objet, ledit simulateur étant apte à donner des qualités de prise d'objet pour les données de base et les données supplémentaires.

Le simulateur utilisé est par, exemple, le simulateur Gazebo plus particulièrement décrit dans le document « Design ans use paradigms for gazebo, an open-source multi-robot simulator », in IEEE/RSJ International Conférence on Intelligent Robots and Systems (IROS), vol. 3, 2004, pp. 2149-2154, de N. Koenig et A. Howard.

Dans un mode de réalisation particulier, l'ensemble des données triées sont associées à des manières de prise de l'objet respectant les conditions suivantes :

- il n'y a pas de collision avec la table ;
- l'objet est soulevé avec succès de la table ;
- la qualité de prise d'objet est supérieure à 0.

Dans un mode de réalisation particulier, le premier auto-encodeur variationnel et le second auto-encodeur variationnel comprennent chacun un codeur, un décodeur et une fonction de coût et en ce qu'une divergence de Kullback-Leibler est ajoutée à ladite fonction de coût.

Cette divergence permet de représenter les données sous la forme d'une distribution normale dans l'espace latent. On améliore ainsi la représentation de l'espace de prise comme un espace continu et non discret.

Dans un mode de réalisation particulier, la quantité de données de base collectées dépend de la complexité de l'objet.

Dans un mode de réalisation particulier, le préhenseur comporte une pluralité d'articulations, ledit préhenseur comprenant un nombre d'actionneurs plus faible que le nombre de degrés de liberté permis par lesdites articulations.

Avec un nombre d'actionneurs plus faible, le préhenseur est moins complexe et donc globalement moins coûteux à utiliser. Un tel préhenseur est appelé préhenseur sous-actionné. Le document « Underactuated Robotic Hands » de Birglen, Lionel, Laliberté, Thierry, Gosselin, Clément M. décrit plus en détail ces préhenseurs sous-actionnés.

Dans un mode de réalisation particulier, les données de commande sont stockées dans une base de données, ladite base de données étant accessible pour la commande du préhenseur du système robotisé. Cette base de données comprend la liste de configuration dans laquelle on va sélectionner la meilleure prise cinématique admissible pour un algorithme de planification de prise.

Un autre objet de l'invention concerne un procédé pour la commande d'un préhenseur d'un système robotisé, ledit préhenseur comprenant un support et au moins deux doigts mobiles par rapport audit support pour prendre un objet, ledit procédé comportant :

- une étape de détermination de la configuration de positionnement dudit objet ;
- une étape de sélection, dans une base de données, de données de commande en fonction de la configuration de positionnement dudit objet, lesdites données de commande étant exploitables par le système robotisé en vue de commander le préhenseur pour prendre l'objet de manière optimale, lesdites données de commande étant générées par la méthode de génération selon l'objet précédent.

Un autre objet de l'invention concerne un système robotisé comportant un préhenseur, ledit préhenseur comprenant un support et au moins deux doigts mobiles par rapport audit support pour prendre un objet, ledit système robotisé comportant :

- un dispositif de détermination de la configuration de positionnement dudit objet ;
- un dispositif d'envoi vers une base de données d'une requête pour l'obtention de données de commande, ladite requête comportant une information sur la configuration de positionnement dudit objet ;
- un dispositif de réception de données de commande provenant de la base de données, lesdites données de commande étant exploitables par le système robotisé en vue de commander le préhenseur pour prendre l'objet de manière optimale, lesdites données de commande étant générées par la méthode de génération selon un des objets précédents.

La présente invention sera mieux comprise à la lecture de la description détaillée de modes de réalisation pris à titre d'exemples nullement limitatifs et illustrés par les dessins annexés sur lesquels :

**[Fig 1]** la figure 1 est une vue en perspective partielle d'un système robotisé conforme à l'invention ;

**[Fig 2]** la figure 2 est une vue de dessous d'un préhenseur du système robotisé de la figure 1 ;

**[Fig 3]** la figure 3 est une vue en perspective du préhenseur de la figure 2 adapté pour prendre un objet selon une première manière de prise ;

**[Fig 4]** la figure 4 est une vue en perspective du préhenseur de la figure 2 adapté pour prendre l'objet selon une seconde manière de prise ;

**[Fig 5]** la figure 5 est une vue en perspective du préhenseur de la figure 2 adapté pour prendre l'objet selon une troisième manière de prise ;

[Fig 6] la figure 6 est une vue schématique d'un procédé pour la commande du préhenseur de la figure 2.

[Fig 7] la figure 7 est une vue schématique d'une méthode de génération de données de commande pour la commande du préhenseur de la figure 2.

[Fig 8] la figure 8 est une vue schématique d'un auto-encodeur variationnel pour la mise en oeuvre de la méthode de génération de données de commande de la figure 7.

Sur les différentes figures, les éléments identiques ou similaires portent les mêmes références.

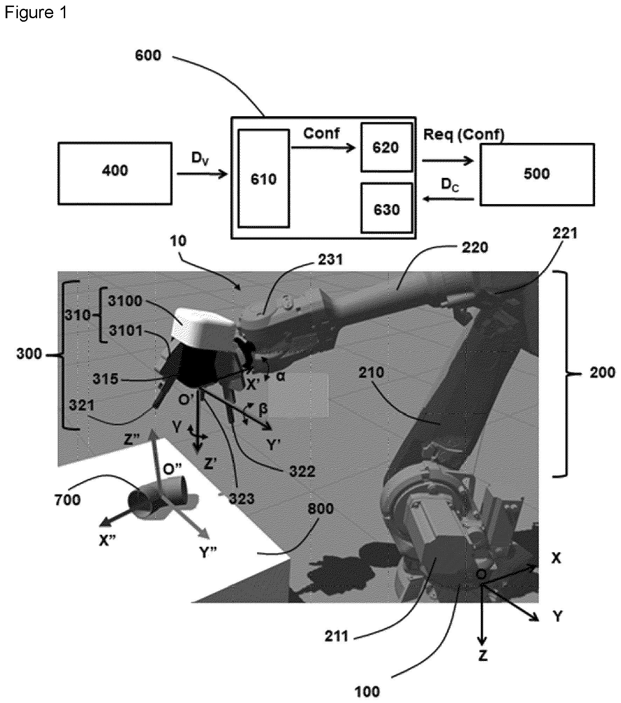

La figure 1 représente un système robotisé 10. Ce système robotisé comprend :

- un socle 100 ;
- un bras 200 ;
- un préhenseur 300 ;
- une caméra 400 ;
- une base de données 500 ;
- un dispositif de traitement de données 600.

Le socle 100 est fixé au sol. A partir d'un point O du socle 100, il est possible d'établir un premier repère euclidien X, Y, Z attaché audit socle 100.

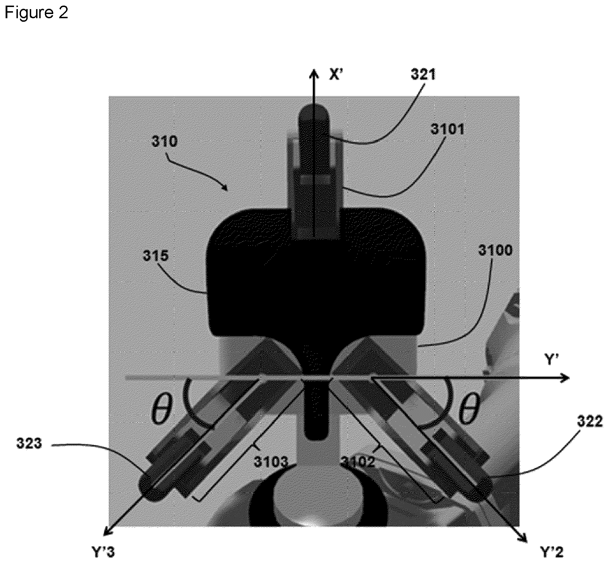

Un bras 200 s'étend à partir du socle 100. Ce bras comprend une première partie de bras 210 et une seconde partie de bras 220. La première partie de bras 210 est mobile par rapport au socle 100. Cette première partie de bras 210 est mise en mouvement par un premier moteur 211. La seconde partie de bras 220 s'étend à partir de la première partie de bras 210. Elle est mise en mouvement par un second moteur 221. Le préhenseur 300 est fixé à l'extrémité de la seconde partie de bras 220. Un troisième moteur 231 permet la mise en mouvement de ce préhenseur 300. D'autres moteurs (non représentés) peuvent être utilisés pour assurer le mouvement du bras. Dans un mode de réalisation privilégié, on utilise un bras à six degrés de liberté. Il y a donc six moteurs utilisés pour mettre en mouvement six parties de bras. A partir d'un point O' du préhenseur 300, il est possible d'établir un second repère euclidien X', Y', Z' attaché au préhenseur 300. Il est possible de déterminer un angle de roulis $\alpha$ du préhenseur 300 autour de l'axe X', un angle de tangage $\beta$ du préhenseur 300 autour de l'axe Y' et un angle de lacet $\gamma$ du préhenseur 300 autour de l'axe Z'. Le préhenseur 300 comprend un support 310, une pluralité de doigts 321, 322, 323 mobiles par rapport audit support 310 et une paume 315. Plus particulièrement comme il est visible à la figure 2, le support 310 comprend une base 3100 et une pluralité de parties intermédiaire 3101,3102, 3103. Chaque partie intermédiaire 3101, 3102, 3103 étant disposée entre la base 3100, un premier doigt 321, un second doigt 322, et un troisième doigt 323 respectif. La paume 315 est disposée sous la base 3100 entre les doigts 321, 322, 323.

Sur la figure 2, Le premier doigt 321 s'étend selon la direction X'. Le second doigt 322 s'étend selon une direction $Y'_2$ en faisant un angle d'écartement $\theta$ par rapport à la direction Y' Le troisième doigt 323 s'étend selon une direction $Y'_3$ en faisant le même angle d'écartement $\theta$ par rapport à la direction Y'. L'angle d'écartement $\theta$ peut varier de façon continue entre 0 et $\pi/2$.

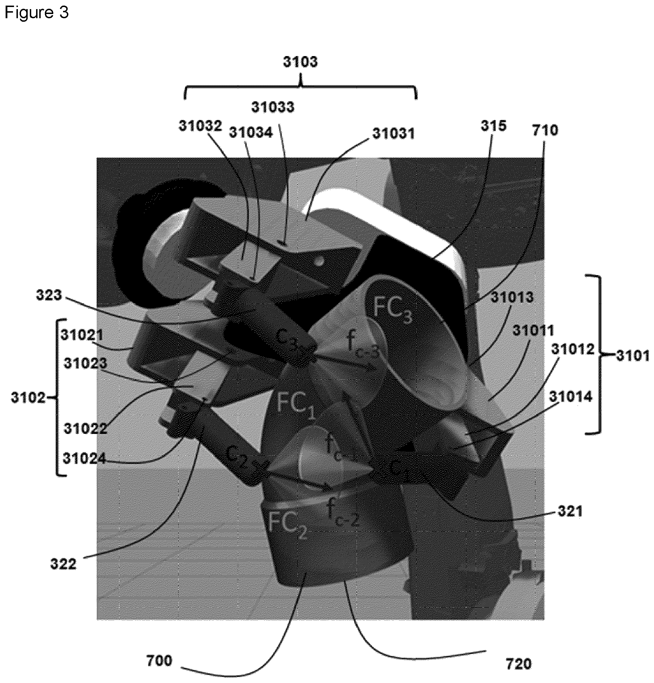

Sur la figure 3, chaque partie intermédiaire 3101, 3102, 3103 comprend respectivement une cage 31011, 31021, 31031 et un levier 31012, 31022, 31032. Chaque levier 31012, 31022, 31032 est en rotation par rapport à la cage respective 31011, 31021, 31031 via un premier axe de rotation 31013, 31023, 31033 disposé à une des extrémités desdits leviers 31012, 31022, 31032. A leur autre extrémité, chaque levier 31012, 31022, 31032 supporte un doigt 321, 322, 323 associé. Chaque doigt 321, 322, 323 est ainsi en rotation par rapport à un levier 31012, 31022, 31032 via un second axe de rotation 31014, 31024, 31034 pour la prise d'un objet 700. Cet objet 700 est ici un coude en PVC pour le raccord de canalisations. Ce coude PVC comprend un premier élargissement 710 à une extrémité et un second élargissement 720 à une autre extrémité. En variante, l'objet 700 peut être un tout autre objet présentant une toute autre complexité, tel qu'un parpaing ou une poulie. Un troisième repère euclidien X", Y", Z" est attaché à l'objet 700. Ce troisième repère euclidien a comme point d'origine le centre de gravité O" dudit objet 700.

On notera que le préhenseur 300 comprend une pluralité de premiers actionneurs (non représentés) pour permettre les rotations des leviers 31012, 31022, 31032 autour des premiers axes de rotation 31013, 31023, 31033 et une pluralité de seconds actionneurs (non représentés) pour permettre les rotations des doigts 321, 322, 323 autour des seconds axes de rotation 31014, 31024, 31034. Dans un mode de réalisation préférentiel de l'invention, le préhenseur 300 ne comprend pas de seconds actionneurs pour les rotations des doigts. Le préhenseur 300 est alors configuré pour que les doigts se plaquent contre l'objet 700 dès que cet objet 700 exerce une pression contre le préhenseur 300, par exemple, une pression contre les doigts. Une telle configuration peut comprendre des ressorts. Dans ce cas, le préhenseur 300 comporte un nombre d'actionneurs plus faible que le nombre de degrés de liberté permis par les articulations du préhenseur 300. Un tel préhenseur est alors dit sous-actionné. Par articulation du préhenseur, on entend les liaisons (axes de rotation, rotules, ...) permettant la mobilité entre deux parties du préhenseur.

Sur la figure 3, chaque doigt 321, 322, 323 est en contact avec l'objet 700 au niveau d'un point de contact C1, C2, C3 respectif. Au niveau de chaque point de contact, le préhenseur 300 développe un cône de friction $FC_1$, $FC_2$, $FC_3$ et pour chaque cône de friction $FC_1$, $FC_2$, $FC_3$ il est possible de déterminer une force de contact $f_{c-1}$, $f_{c-2}$, $f_{c-3}$. Le torseur d'effort total $F_o$ de l'objet est exprimé selon l'équation EQ1 suivante :

$$EQ1/ \ F_o = Gf_c$$

dans laquelle $f_c$ représente les forces de contact $f_{c-1}$, $f_{c-2}$, $f_{c-3}$. Chacune de ces forces $f_{c-1}$, $f_{c-2}$, $f_{c-3}$ appartient respectivement à un cône de friction $FC_1$, $FC_2$, $FC_3$ de tel sorte que $f_c \in FC$. G représente une matrice de saisie. Cette matrice de saisie stocke des informations géométriques sur les contacts formant l'emprise, comme les positions des points de contact C1, C2, C3 et les directions des forces appliquées sur eux. L'équation EQ1 montre que la matrice de saisie G permet de calculer le torseur d'effort total $F_0$ à partir des forces de contact dans chaque cône respectif. La qualité de prise de l'objet peut être définie de la façon suivante : si pour tout torseur d'effort externe F, appliqué sur l'objet il existe des forces de contact $f_c$ telles que :

$$EQ2/ \ \ Gf_c = -F_e$$

avec $f_e \in R^6$ et $f_c \in FC$, alors la prise est une prise par force de serrage mécanique (dit « force-closure » en anglais). La propriété de cette force de serrage mécanique ne tient pas compte de la capacité du préhenseur à appliquer les forces de contact. Elle tient seulement compte de l'existence de ces forces de contact. Une propriété souhaitable pour une prise est d'obtenir cette force de serrage mécanique, c'est-à-dire d'avoir capacité à résister à des torseurs d'efforts perturbateurs quelconques. Cette propriété peut être approximée à l'aide de différentes métriques, par exemple à l'aide de la valeur singulière minimale de G. Elle est notée ici $Q_{MSV}$. A partir du vecteur des valeurs singulières de G noté $\sigma$ (G), $Q_{MSV}$ est exprimée selon l'équation suivante :

$$EQ3/ \ Q_{MSV} = \min(\sigma(G))$$

La condition nécessaire pour avoir une prise par force de serrage mécanique est que $Q_{MSV}$ soit supérieur à 0. Une valeur nulle indiquerait une singularité numérique. Dans un tel cas, compte-tenu des positions de contact et des directions de forces de contact, la prise ne peut résister à des perturbations selon au moins une direction. Plus la valeur de $Q_{MSV}$ est importante, plus la prise est éloignée d'une telle singularité numérique.

Sur la figure 3, le coude en PVC 700 est saisi par le préhenseur 300 selon une première manière. Selon cette première manière, le préhenseur 300 vient mettre en contact la paume 315 du préhenseur 300 contre une surface externe du premier élargissement 710. Pour cette première manière de prise, le coude 700 a été posé verticalement sur une table 800 via le second élargissement 720, selon une première configuration de positionnement dudit objet pour sa prise.

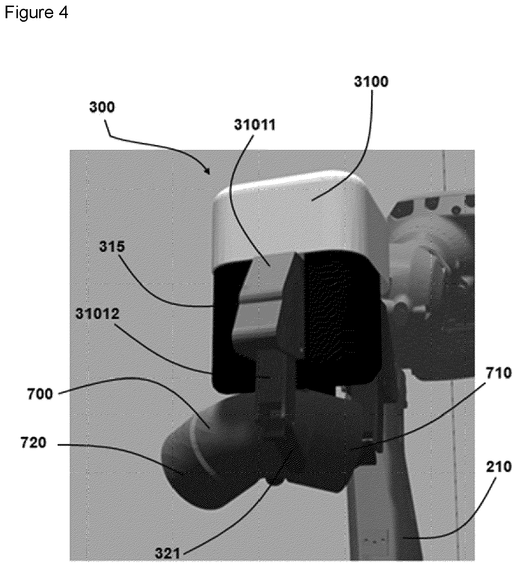

Sur la figure 4, le coude 700 est saisi par le préhenseur 300 selon une seconde manière. Selon cette seconde manière, le préhenseur 300 vient saisir le coude 700 sensiblement au centre de ce coude entre le premier élargissement 710 et le second élargissement 720. Pour cette seconde manière de prise, le coude 700 a été posé à plat sur la table 800 selon une seconde configuration de positionnement dudit objet pour sa prise, comme cela est plus particulièrement représenté à la figure 1.

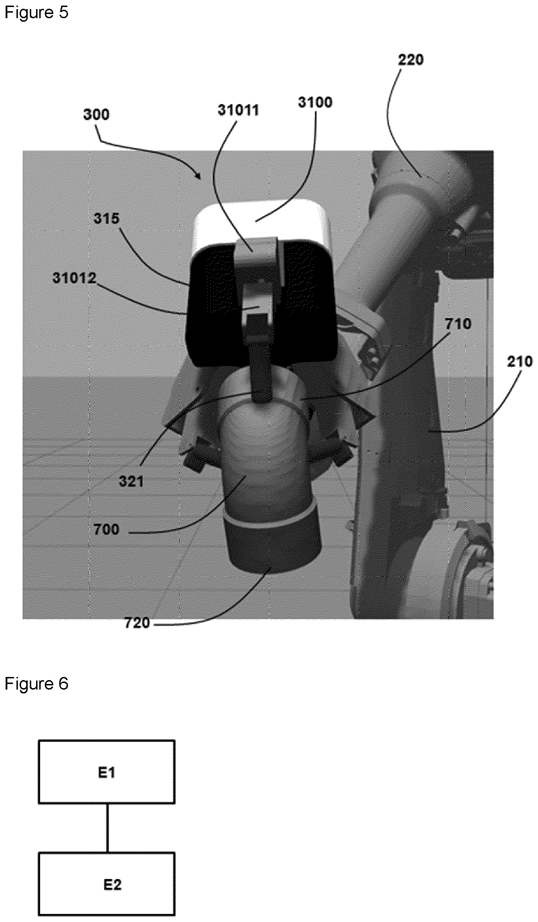

Sur la figure 5, le coude 700 est saisi par le préhenseur 300 selon une troisième manière de prise. Selon cette troisième manière de prise, le préhenseur 300 vient placer une ouverture du premier élargissement 710 en-vis-à-vis de la paume 315 du préhenseur 300. Pour cette troisième manière de prise, le coude 700 a été posé selon la même première configuration de positionnement dudit objet pour sa prise que la figure 3. C'est-à-dire que le coude 700 a été posé verticalement sur la table 800 via le second élargissement 720. Ainsi, une configuration de positionnement de l'objet pour sa prise peut donner lieu à différentes manières de prise par le préhenseur 300. Ces différentes manières de prise sont fonctions du positionnement du point 0' appartenant au préhenseur 300, de l'angle de roulis $\alpha$, de l'angle de tangage $\beta$ et de l'angle de lacet $\gamma$. Chaque manière de prise génère alors une qualité de prise $Q_{MSV}$ propre pouvant présenter une valeur différente.

La caméra 400 du système robotisé 10, visible à la figure1, est adaptée pour donner une information sur la configuration de positionnement de l'objet 700 pour la prise dudit objet. Cette caméra 400 est, ici, schématisée comme étant extérieure au préhenseur 300.

Le système robotisé 10 comprend également une base de données 500. Cette base de données est adaptée pour stocker des données de commande $D_C$. Ces données de commande $D_C$ permettent de contrôler le préhenseur 300 via notamment la commande du premier moteur 211, la commande du second moteur 221 et la commande du troisième moteur 231.

Enfin, le système robotisé 10 comprend un dispositif de traitement de données 600. Ce dispositif de traitement de données comprend :

- un dispositif de détermination 610 de la configuration de positionnement de l'objet 700 pour sa prise ;
- un dispositif d'envoi 620 d'une requête Req pour l'obtention de données de commande $D_c$ ;

- un dispositif de réception 630 de données de commande $D_c$.

Le dispositif de détermination 610 est adapté pour recevoir des données vidéo $D_V$ de la caméra 400. A partir de ces données vidéo $D_V$, le dispositif de détermination 610 est apte à déterminer la configuration Conf de l'objet 700 pour sa prise. Plus particulièrement, le dispositif de détermination 610 est apte à déterminer des coefficients d'équation a, b, c, d d'une équation cartésienne représentative d'un plan supérieur de la table dans un repère lié à l'objet. Une fois la configuration Conf de l'objet 700 déterminée, celle-ci est envoyée par le dispositif d'envoi 620 vers la base de données 500 via la requête Req. En retour, la base de données transmet au dispositif de réception 630 les données de commande $D_C$ qui sont les plus adaptées à la configuration Conf de l'objet 700. Les données de commande $D_c$ sont exploitables par le système robotisé 10 pour commander le préhenseur 300 afin de prendre l'objet 700 de manière optimale.

La figure 6 illustre les étapes d'un procédé pour la commande du préhenseur 300 du système robotisé 10. Ce procédé comprend une étape E1 de détermination de la configuration de positionnement de l'objet 700. Dans une étape E2 de sélection, les données de commande $D_c$ sont sélectionnées dans la base de données 500. Ces données de commande $D_c$ sont sélectionnées en fonction de la configuration Conf de positionnement de l'objet 700. Les données de commande $D_c$ sont exploitables par le système robotisé 10 en vue de commander le préhenseur 300 pour prendre l'objet 700 de manière optimale.

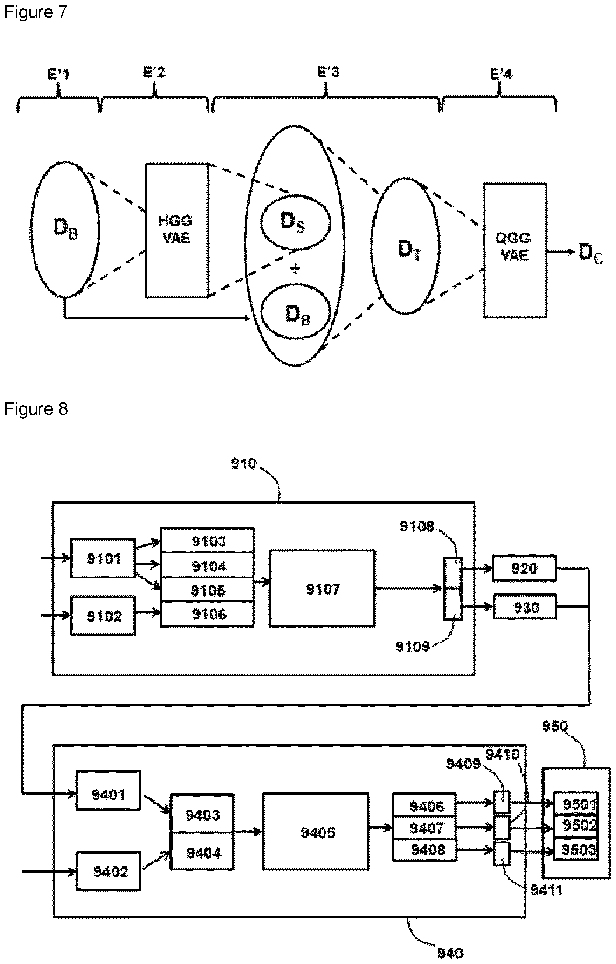

Les données de commande $D_c$ sont générées par une méthode de génération de données pour la commande du préhenseur 300, ci-après exposée à l'appui de la figure 7.

Cette méthode de génération de données comprend une étape E'1 de collecte de données de base $D_B$. Ces données de base $D_B$ correspondent à un nombre limité de manières de prise de l'objet 700. Ces manières de prise de l'objet 700 sont, ici, réalisées à l'aide d'une intervention humaine. Par exemple, un opérateur va orienter le préhenseur vis-à-vis de l'objet 700 pour l'aider à réaliser la saisie. Lors de cette prise, les données de base $D_B$ associée vont être enregistrées. Ces données de base $D_B$ comportent ici plusieurs paramètres. Ces données $D_B$ comportent ainsi trois paramètres de position $X''_{O'}$, $Y''_{O'}$, $Z''_{O'}$ du point O' du préhenseur 300 dans le troisième repère euclidien X'', Y'', Z'' lié à l'objet 700. De plus, les données $D_B$ comportent des paramètres d'orientation qui sont les angles d'Euler, c'est-à-dire l'angle de roulis $\alpha$, l'angle de tangage $\beta$, l'angle de lacet $\gamma$. En variante, les données $D_B$ comportent un quaternion q. Le quaternion q est une représentation d'une rotation équivalente aux angles d'Euler. Il fournit une notation mathématique adaptée pour représenter l'orientation et la rotation de l'objet 700 en trois dimensions. Le quaternion ne présente pas le problème d'enroulement modulo $2\pi$ et de blocage de cardan lié à l'utilisation des angles d'Euler. Plus généralement, un quaternion q est un nombre complexe qui comprend quatre composantes $q_x$, $q_y$, $q_z$, $q_w$. Les composantes $q_x$, $q_y$, $q_z$ représentent les coordonnées d'un vecteur axe de rotation. La composante $q_w$ représente un angle de rotation autour de ce vecteur. Les données $D_B$ comportent également l'angle d'écartement $\theta$.

Les données de base $D_B$, comprennent également la configuration Conf de l'objet 700 pour sa prise lorsque celui-ci est positionné sur la table 800, c'est-à-dire les coefficients d'équation a, b, c, d de l'équation cartésienne représentative du plan supérieur de la table dans le repère lié à l'objet.

La quantité de données de base collectée dépend de la complexité de l'objet 700. A titre d'exemple, pour le coude PVC de raccord il est possible de collecter des données de base $D_B$ pour 145 manières de prise de l'objet 700. De la même manière, pour le parpaing il est possible de collecter des données de base $D_B$ pour 141 manières de prise de l'objet 700. Enfin pour la poulie, il est possible de collecter des données de base $D_B$ pour 118 manières de prise de l'objet 700.

Dans une première étape E'2 de génération, des données supplémentaires $D_S$ sont générées à partir des données de base $D_B$. Cette première étape de génération est réalisée par un premier auto-encodeur variationnel noté HGG VAE acronyme de Human-initiated Grasp Generator Variational Autoencoder en anglais. Cet auto-encodeur variationnel permet d'explorer l'espace des prises en se concentrant autour des prises générées à l'aide de l'opérateur. L'auto-encodeur variationnel est un outil d'apprentissage qui permet d'extraire les corrélations existantes entre les paramètres des données de base $D_B$ afin de créer une représentation compacte des données dans un espace latent. Echantillonner des valeurs dans cet espace permet ensuite de générer de façon fiable de nouvelles prises semblables aux prises associées aux données de base $D_B$ L'auto-encodeur variationnel est avant tout un outil génératif et de réduction dimensionnelle.

Les données supplémentaire $D_S$ comprennent ainsi les même types de paramètre que les données de base $D_B$, ces données supplémentaires $D_S$ ayant été extrapolées à partir desdites données de base $D_B$.

Le fonctionnement d'un auto-encodeur variationnel est plus particulièrement décrit à la figure 8, à titre non limitatif.

L'auto-encodeur comprend ;

- un codeur 910;
- un bloc 920 de calcul de Log-variance ;
- un bloc 930 de calcul de moyenne ;
- un décodeur 940 ;
- un bloc de configuration de prise 950 ;
- une fonction de coût.

Le codeur 910 comprend plus particulièrement :

- un bloc de réception 9101 adapté pour recevoir les paramètres de position $X"_{O'}$, $Y"_{o'}$, $Z"_{o'}$ et les paramètres d'orientation $\alpha$, $\beta$, $\gamma$, $\theta$, l'ensemble étant de taille 7. En variante, le bloc de réception 9101 est adapté pour recevoir les paramètres de position $X"_{O'}$, $Y"_{O'}$, $Z"_{O'}$ et les composantes $q_x$, $q_y$, $q_z$, $q_w$ du quaternion q ainsi que l'angle d'écartement $\theta$, l'ensemble étant de taille 8 ;
- un bloc de réception 9102 adapté pour recevoir la configuration Conf de l'objet 700 et plus particulièrement les coefficients d'équation a, b, c, d de l'équation cartésienne représentative du plan supérieur de la table, l'ensemble étant de taille 4 ;
- un bloc de prétraitement 9103 des paramètres de position ;
- un bloc de prétraitement 9104 d'une partie des paramètres d'orientation ;
- un bloc de prétraitement 9105 de l'angle d'écartement $\theta$ ;
- un bloc de prétraitement 9106 des coefficients d'équation a, b, c, d de l'équation cartésienne ;
- un bloc de codage principal 9107 pour encoder les données provenant des différents blocs de prétraitement 9103, 9104, 9105, 9106.
- un premier bloc de sortie 9108 ;
- un second bloc de sortie 9109.

Le bloc de réception 9101, le bloc de réception 9102 forment la couche d'entrée du codeur 910.

Les blocs de prétraitement 9103, 9104, 9105, 9106 et le bloc d'encodage principal 9107 forment les couches cachées du codeur 910.

Les blocs de sortie 9108, 9109 forment la couche de sortie du codeur 910.

Le premier bloc de sortie 9108 vient alimenter un bloc 920 de calcul de Log-variance. On vient ainsi appliquer la fonction log sur la variance. Le passage en log favorise l'implémentation des données de l'auto-encodeur variationnel. Le second bloc de sortie 9109 vient alimenter, quant à lui, un bloc 930 de calcul de moyenne.

Le décodeur 940 comprend plus particulièrement :

- un bloc de réception 9401 adapté pour recevoir des résultats d'échantillonnage de taille 1, l'espace latent étant de taille 1. Ceci permet une compression maximale des données. En variante, l'espace latent pourrait être de dimension supérieure.
- un bloc de réception 9402 adapté pour recevoir la configuration Conf de l'objet 700 et plus particulièrement les coefficients d'équation a, b, c, d de l'équation cartésienne représentative du plan supérieur de la table, l'ensemble étant de taille 4 ;
- un bloc de prétraitement 9403 de l'espace latent ;
- un bloc de prétraitement 9404 des coefficients d'équation a, b, c, d de l'équation cartésienne ;
- un bloc de décodage principal 9405 pour décoder les données provenant des blocs de prétraitement 9403, 9404 ;
- un bloc de postraitement 9406 des paramètres de position ;
- un bloc de postraitement 9407 d'une partie des paramètres d'orientation ;
- un bloc de postraitement 9408 de l'angle d'écartement $\theta$ ;
- un premier bloc de sortie 9409 alimenté par le bloc de postraitement 9406 des paramètres de position ;
- un second bloc de sortie 9410 alimenté par le bloc de postraitement 9407 d'une partie des paramètres d'orientation ;
- un troisième bloc de sortie 9411 alimenté par le bloc de postraitement 9408 de l'angle d'écartement $\theta$.

Le bloc de réception 9401 et le bloc de réception 9402 forment la couche d'entrée du décodeur 940.

Les blocs de prétraitement 9403, 9404, le bloc de décodage principal 9405, les blocs de postraitement 9406, 9407, 9408 forment les couches cachées du décodeur 940.

Les blocs de sortie 9409, 9410, 9411 forment la couche de sortie du décodeur 940.

Les blocs de sortie 9409, 9410, 9411 viennent alimenter un bloc de configuration de prise 950. Ce bloc de configuration de prise 950 comprend un bloc 9501 de position, un bloc 9502 d'orientation, un bloc 9503 d'angle d'écartement θ. Ainsi, le premier bloc de sortie 9409 vient alimenter le bloc 9501 de position avec une fonction sigmoïde. Le second bloc de sortie 9410 vient alimenter le bloc 9502 avec une fonction de normalisation du quaternion q. Le troisième bloc de sortie 9411 vient alimenter le bloc 9503 avec une fonction sigmoïde.

Les blocs 9103, 9104, 9105, 9106, 9107 du codeur 910 et les blocs 9403, 9404, 9405, 9406, 9407, 9408 du décodeur 940 formant les couches cachées sont constitués de couches entièrement connectées avec une fonction d'activation de type tangente hyperbolique.

Le bloc de codage principal 9107 et le bloc de décodage principal 9405 ont une architecture interne symétrique.

L'auto-encodeur variationnel est implémenté avec une plate-forme Open Source TensorFlow et une bibliothèque open source écrite en python de type Keras.

La fonction de coût de l'auto-encodeur variationnel englobe une erreur de position $err_p$ et une erreur d'orientation $err_o$. L'erreur de position $err_p$ est la distance euclidienne entre la position réelle $P_{true}$ et la position prédite $P_{pred}$ de sorte que :

$$EQ5/\ err_p = \|\ P_{true} - P_{pred}\ \|$$

L'erreur d'orientation $err_o$ est l'angle entre entre deux orientations $q_{true}$ et $q_{pred}$ exprimées en quaternion, de tel sorte que :

$$[0077]\ EQ6/\ err_o = 2\arccos\left(R(q_{true}q_{pred}^{-1})\right)$$

avec $q_{pred}^{-1}$ la réciproque de $q_{pred}$ et R la partie réelle.

En variante, il est possible d'utiliser une erreur quadratique moyenne pour déterminer la fonction de coût de l'auto-encodeur variationnel.

Dans un mode de réalisation particulier, une divergence de Kullback-Leibler est ajoutée à la fonction de coût. La divergence de Kullback-Leibler est une mesure de dissimilarité entre deux distributions de probabilité. Cette divergence permet de représenter les données sous la forme d'une distribution normale dans l'espace latent.

La méthode de génération de données comprend également une étape E'3 de tri des données de base $D_B$ et des données supplémentaires $D_S$ pour constituer un ensemble de données triées $D_T$. Cette étape de tri est réalisée à partir d'un simulateur adapté pour générer une cinématique du préhenseur 300 et des collisions de ce préhenseur 300 avec l'objet 700. Un tel simulateur est, par exemple, le simulateur Gazebo. Ce simulateur est apte à donner des qualités de prise d'objet $Q_{MSV}$ pour les données de base $D_B$ et les données supplémentaires $D_S$. Les données triées $D_T$ comprennent alors également des valeurs de qualité de prise d'objet $Q_{MSV}$. Les données triées $D_T$ sélectionnées sont alors associées à des manières de prise d'objet 700 respectant les conditions suivantes :

- il n'y a pas de collision avec la table 800 ;
- l'objet 700 est soulevé avec succès de la table 800 ;
- la qualité de prise d'objet $Q_{MSV}$ est supérieur à 0.

Le tri des données pour obtenir l'ensemble des données de tri $D_T$ est réalisé à partir du critère de qualité de la prise d'objet $Q_{MSV}$. L'ensemble des données de tri $D_T$ présente donc une taille inférieure à la somme des données de base $D_B$ et des données supplémentaires $D_S$.

En variante, les prises échouées, c'est-à-dire celle qui ne respectent pas les conditions citées ci-dessus sont conservées dans la base de données de tri $D_T$. Cette base de données de tri est alors la concaténation des données de base $D_B$ et des données supplémentaires $D_S$ avec en plus une information de qualité de prise en cas de succès. Cette qualité de prise est nulle en cas d'échec de la prise. Conserver les prises échouées permet de réduire la probabilité pour l'auto-encodeur variationnel de faire une mauvaise prédiction si des prises réussies ou échouées sont proches dans l'espace latent.

Dans une seconde étape E'4 de génération, les données de commande $D_C$ sont générées à partir des données triées $D_T$. La seconde étape de génération est réalisée par un second auto-encodeur variationnel noté QGG VAE acronyme de Quality-oriented Grasp Generator Variational Autoencoder en anglais. Ce second auto-encodeur variationnel QGG VAE a le même fonctionnement que l'auto-encodeur de la figure 8. Il comprend cependant une sortie pour le décodeur correspondant à la qualité de prise et un bloc supplémentaire de post-traitement dans le décodeur pour le traitement de cette information de qualité de prise. La fonction de coût de ce second auto-encodeur variationnel QGG VAE est identique à la fonction de coût du premier auto-encodeur variationnel HGG VAE, avec cependant un terme supplémentaire correspondant à l'erreur de prédiction de qualité de prise. On notera que les données de commande $D_C$ comprennent également des valeurs de qualité de prise d'objet $Q_{MSV}$.

La méthode de génération de données objet de l'invention apporte les avantages suivants :

- c'est une méthode efficace pour explorer l'espace de prises d'un préhenseur sous-actionné pluri-digital afin de générer des prises fiables pour un objet connu ;
- cette méthode présente une grande flexibilité pour des préhenseurs sous-actionnés car elle ne limite pas la dimension de l'espace de prises à des hypothèses strictes et arbitraires ;
- cette méthode repose sur un ensemble réduit de prises expertes déterminées manuellement, il est alors possible d'élargir le nombre de prises possibles à partir des données de base par une génération continue de micro-variations autour d'une même prise de base ;
- cette méthode utilise une approche hybride analytique et data-driven basée sur l'utilisation d'une métrique de qualité de prise analytique et d'auto-encodeurs variationnels. Elle permet d'associer à chaque prise générée par un auto-encodeur variationnel une prédiction de qualité de prise, basée sur une modélisation analytique ;
- cette méthode permet de gérer la génération de prises puis la vérification que les prises ne sont pas en collision de manière « hors ligne ». Seul le résultat final de ces étapes obtenu par le second auto-encodeur variationnel, QGG VAE, est utilisé « en ligne » lorsque l'on souhaite prédire une prise. Le premier auto-encodeur variationnel, HGG VAE, est utilisé pour étendre le dataset initial des prises primitives, afin d'avoir plus de données pour l'entraînement final du second auto-encodeur variationnel ;
- dans cette méthode, le second auto-encodeur variationnel résout un problème de génération et de régression, c'est-à-dire que l'on gère une prise et en même temps on prédit une valeur de qualité pour cette prise. La qualité de prise est une mesure calculée analytiquement en fonction de la position des contacts sur l'objet. Les collisions ne sont pas prises en compte explicitement, elles correspondent simplement à une qualité de prise nulle ;
- cette méthode se concentre sur la génération de prises et s'adapte plus spécifiquement au cas complexe des préhenseurs pluri-digitaux et sous-actionnés.

L'invention qui est définie par les revendications, n'est pas limitée aux modes de réalisation et variantes présentées et d'autres modes de réalisation et variantes apparaîtront clairement à l'homme du métier.

Ainsi, le critère de qualité de la prise d'objet peut être exprimé autrement qu'à partir de la valeur singulière minimale de G. La méthode de génération comprend alors une autre métrique de qualité de prise.

Lors de la phase de création de prises initiales par l'humain, des valeurs discrètes, telles que 0, $\pi/6$, $\pi/4$ et $\pi/2$, sont sélectionnées pour l'angle d'écartement $\theta$. Les prises générées ensuite par le premier auto-encodeur variationnel HGG VAE et par le second auto-encodeur variationnel QGG VAE vont privilégier ces valeurs discrètes car ils restent proches des données initiales. Ils peuvent aussi utiliser des angles d'écartement $\theta$ différents et le préhenseur est capable de les exécuter.

Ainsi, la caméra 400 peut être directement fixée sur la base du préhenseur.

Ainsi, les codeurs et les décodeurs des auto-encodeurs variationnels peuvent présenter des variantes de structure interne. Le choix des entrées-sorties et l'architecture globale d'auto-encodeur variationnel resteront cependant identiques.

## Revendications

1. Méthode de génération de données pour la commande d'un préhenseur (300) d'un système robotisé (10), ledit préhenseur (300) comportant un support (310) et au moins deux doigts mobiles (322, 323) par rapport audit support (310) pour prendre un objet (700), ladite méthode comprenant :

   - une étape (E'1) de collecte de données de base ($D_B$) d'un nombre limité de manière de prises dudit objet (700) réalisées par un être humain ;
   - une première étape (E'2) de génération pour la génération de données supplémentaires ($D_S$) à partir desdites données de base ($D_B$), ladite première étape (E'2) de génération étant réalisée par un premier auto-encodeur variationnel (HGG VAE) ;
- une étape de tri (E'3) des données de base ($D_B$) et des données supplémentaires ($D_S$) pour constituer un ensemble de données triées ($D_T$), ladite étape de tri (E'3) étant réalisée à partir d'un critère de qualité de la prise d'objet ($Q_{MSV}$) ;
- un seconde étape (E'4) de génération de données pour la génération de données de commande ($D_C$) à partir des données triées ($D_T$), ladite seconde étape (E'4) de génération étant réalisée par un second auto-encodeur variationnel (QGG VAE).

2. Méthode de génération selon la revendication 1, dans laquelle les données de base ($D_B$), les données supplémentaires ($D_S$), les données triées ($D_T$) et les données de commande ($D_C$) comportent une pluralité de paramètres, lesdits paramètres étant choisis parmi une liste de paramètres comprenant :

- des paramètres de position ($X''_{O'}$, $Y''_{O'}$, $Z''_{O'}$) ;
- des paramètres d'orientation ($\alpha$, $\beta$, $\gamma$, $\theta$ ; $q_x$, $q_y$, $q_z$, $q_w$ ) ;
- une configuration (Conf) de l'objet (700) pour sa prise (a, b, c, d).

3. Méthode de génération selon l'une quelconque des revendications 1 ou 2, dans laquelle le critère de qualité de la prise d'objet ($Q_{MSV}$) est fonction de caractéristiques géométriques de points de contact entre le préhenseur (300) et ledit objet (700).

4. Méthode de génération selon l'une quelconque des revendications 1 à 3, dans laquelle l'étape de tri (E'3) est réalisée à partir d'un simulateur adapté pour générer une cinématique du préhenseur (300) du système robotisé (10) et des collisions de ce préhenseur (300) avec l'objet (700), ledit simulateur étant apte à donner des qualités de prise d'objet ($Q_{MSV}$) pour les données de base ($D_B$) et les données supplémentaires ($D_S$).

5. Méthode de génération selon la revendication 4, dans laquelle l'ensemble des données triées ($D_T$) sont associées à des manières de prise de l'objet (700) respectant les conditions suivantes :

- il n'y a pas de collision avec la table (800) ;
- l'objet (700) est soulevé avec succès de la table (800) ;
- la qualité de prise d'objet ($Q_{MSV}$) est supérieure à 0.

6. Méthode de génération selon l'une quelconque des revendications 1 à 5, dans laquelle le premier auto-encodeur variationnel (HGG VAE) et le second auto-encodeur variationnel (QGG VAE) comprennent chacun un codeur (910), un décodeur (940) et une fonction de coût et en ce qu'une divergence de Kullback-Leibler est ajoutée à ladite fonction de coût.

7. Méthode de génération selon l'une quelconque des revendications 1 à 6, dans laquelle la quantité de données de base ($D_B$) collectées dépend de la complexité de l'objet (700).

8. Méthode de génération selon l'une quelconque des revendications 1 à 7, dans laquelle le préhenseur (300) comportant une pluralité d'articulations, ledit préhenseur (300) comprend un nombre d'actionneurs plus faible que le nombre de degrés de liberté permis par lesdites articulations.

9. Méthode de génération selon l'une quelconque des revendications 1 à 8, dans laquelle les données de commande ($D_C$) sont stockées dans une base de données (500), ladite base de données (500) étant accessible pour la commande du préhenseur (300) du système robotisé (10).

10. Procédé pour la commande d'un préhenseur (300) d'un système robotisé (10), ledit préhenseur (300) comportant un support (310) et au moins deux doigts mobiles (322, 323) par rapport audit support (310) pour prendre un objet (700), ledit procédé comportant :

- une étape de détermination (E1) de la configuration (Conf) de positionnement dudit objet (700) ;
- une étape de sélection (E2), dans une base de données (500), de données de commande ($D_C$) en fonction de la configuration (Conf) de positionnement dudit objet (700), lesdites données de commande ($D_C$) étant exploitables par le système robotisé (10) en vue de commander le préhenseur (300) pour prendre l'objet (700) de manière optimale, lesdites données de commande ($D_C$) étant générées par une méthode de génération selon l'une quelconque des revendications 1 à 9.

**11.** Système robotisé comportant un préhenseur (300), ledit préhenseur (300) comportant un support (310) et au moins deux doigts mobiles (322, 323) par rapport audit support (310) pour prendre un objet (700), ledit système robotisé (10) comportant :

    - un dispositif de détermination (610) de la configuration de positionnement (Conf) dudit objet (700) ;
    - un dispositif d'envoi (620) vers une base de données (500) d'une requête (Req (Conf)) pour l'obtention de données de commande ($D_C$), ladite requête (Req (Conf)) comportant une information sur la configuration de positionnement (Conf) dudit objet (700) ;
    - un dispositif de réception (630) de données de commande ($D_C$) provenant de la base de données (500), lesdites données de commande ($D_C$) étant exploitables par le système robotisé (10) en vue de commander le préhenseur (300) pour prendre l'objet (700) de manière optimale, lesdites données de commande ($D_C$) étant générées par une méthode de génération selon l'une quelconque des revendications 1 à 9.

**Patentansprüche**

**1.** Verfahren zur Erzeugung von Daten für die Steuerung eines Greifers (300) eines robotisierten Systems (10), wobei der Greifer (300) einen Träger (310) und mindestens zwei Finger (322, 323) aufweist, die in Bezug auf den Träger (310) beweglich sind, um einen Gegenstand (700) aufzunehmen, wobei das Verfahren Folgendes umfasst:

    - einen Schritt (E'1) des Sammelns von Basisdaten (DB) einer begrenzten Anzahl von durch einen Menschen ausgeführten Aufnahmeweisen des Objekts (700);
    - einen ersten Erzeugungsschritt (E'2) des Erzeugens von Zusatzdaten ($D_S$) aus den Basisdaten ($D_B$), wobei der erste Erzeugungsschritt (E'2) von einem ersten variationellen Selbstcodierer (HGG VAE) durchgeführt wird;
    - einen Sortierschritt (E'3) der Basisdaten ($D_B$) und der Zusatzdaten ($D_S$), um einen Satz sortierter Daten ($D_T$) zu bilden, wobei der Sortierschritt (E'3) anhand eines Kriteriums für die Qualität der Objektaufnahme ($Q_{MSV}$) durchgeführt wird;
    - einen zweiten Datenerzeugungsschritt (E'4) zur Erzeugung von Steuerdaten ($D_C$) aus den sortierten Daten ($D_T$), wobei der zweite Erzeugungsschritt (E'4) von einem zweiten variationellen Selbstcodierer (QGG VAE) durchgeführt wird.

**2.** Erzeugungsverfahren nach Anspruch 1, wobei die Basisdaten ($D_B$), die Zusatzdaten ($D_S$), die sortierten Daten ($D_T$) und die Steuerdaten ($D_C$) eine Vielzahl von Parametern umfassen, wobei die Parameter aus einer Liste von Parametern ausgewählt werden, die Folgendes umfasst:

    - Positionsparameter ($X"_{O'}$, $Y"_{O'}$, $Z"_{O'}$);
    - Orientierungsparameter ($\alpha$, $\beta$, $\gamma$, $\theta$; $q_x$, $q_y$, $q_z$, $q_w$);
    - eine Konfiguration (Conf) des Objekts (700) für seine Aufnahme (a, b, c, d).

**3.** Erzeugungsverfahren nach einem der Ansprüche 1 oder 2, wobei das Kriterium für die Qualität der Objektaufnahme ($Q_{MSV}$) von geometrischen Merkmalen von Kontaktpunkten zwischen dem Greifer (300) und dem Objekt (700) abhängt.

**4.** Erzeugungsverfahren nach einem der Ansprüche 1 bis 3, wobei der Sortierschritt (E'3) anhand eines Simulators durchgeführt wird, der dazu geeignet ist, eine Kinematik des Greifers (300) des robotisierten Systems (10) und Kollisionen dieses Greifers (300) mit dem Objekt (700) zu erzeugen, wobei der Simulator in der Lage ist, Qualitäten der Objektaufnahme ($Q_{MSV}$) für die Basisdaten ($D_B$) und die Zusatzdaten ($D_S$) anzugeben.

**5.** Erzeugungsverfahren nach Anspruch 4, wobei der Satz sortierter Daten ($D_T$) mit Objektaufnahmeweisen (700) verknüpft ist, welche die folgenden Bedingungen erfüllen:

    - es gibt keine Kollision mit dem Tisch (800);
    - das Objekt (700) wird erfolgreich von dem Tisch (800) gehoben;
    - die Qualität der Objektaufnahme ($Q_{MSV}$) ist größer als 0.

**6.** Erzeugungsverfahren nach einem der Ansprüche 1 bis 5, wobei der erste variationelle Selbstcodierer (HGG VAE) und der zweite variationelle Selbstcodierer (QGG VAE) jeweils einen Codierer (910), einen Decodierer (940) und eine Kostenfunktion umfassen und, dass eine Kullback-Leibler-Divergenz zu der Kostenfunktion hinzugefügt wird.

**7.** Erzeugungsverfahren nach einem der Ansprüche 1 bis 6, wobei die Menge der gesammelten Basisdaten ($D_B$) von der Komplexität des Objekts (700) abhängt.

**8.** Erzeugungsverfahren nach einem der Ansprüche 1 bis 7, wobei der Greifer (300) eine Vielzahl von Gelenken aufweist, wobei der Greifer (300) eine geringere Anzahl an Stellgliedern umfasst als die Anzahl an Freiheitsgraden, die durch die Gelenke ermöglicht werden.

**9.** Erzeugungsverfahren nach einem der Ansprüche 1 bis 8, wobei die Steuerdaten ($D_C$) in einer Datenbank (500) gespeichert werden, wobei auf die Datenbank (500) zur Steuerung des Greifers (300) des robotisierten Systems (10) zugegriffen werden kann.

**10.** Verfahren zur Steuerung eines Greifers (300) eines robotisierten Systems (10), wobei der Greifer (300) einen Träger (310) und mindestens zwei Finger (322, 323) umfasst, die relativ zu dem Träger (310) beweglich sind, um ein Objekt (700) aufzunehmen, wobei das Verfahren Folgendes umfasst:

- einen Schritt der Bestimmung (E1) der Positionierungskonfiguration (Conf) des Objekts (700);
- einen Schritt der Auswahl (E2) von Steuerdaten ($D_C$) aus einer Datenbank (500) in Abhängigkeit von der Positionierungskonfiguration (Conf) des Objekts (700), wobei die Steuerdaten ($D_C$) durch das robotisierte System (10) verwertbar sind, um den Greifer (300) zu steuern, um das Objekt (700) optimal aufzunehmen, wobei die Steuerdaten ($D_C$) durch ein Erzeugungsverfahren nach einem der Ansprüche 1 bis 9 erzeugt werden.

**11.** Robotisiertes System mit einem Greifer (300), wobei der Greifer (300) einen Träger (310) und mindestens zwei Finger (322, 323) umfasst, die in Bezug auf den Träger (310) beweglich sind, um ein Objekt (700) aufzunehmen, wobei das robotisierte System (10) Folgendes umfasst:

- eine Vorrichtung (610) zur Bestimmung der Positionierungskonfiguration (Conf) des Objekts (700);
- eine Vorrichtung (620) zum Senden einer Anforderung (Req (Conf)) an eine Datenbank (500) zum Erzielen von Steuerdaten ($D_C$), wobei die Anforderung (Req (Cont)) eine Information über die Positionierungskonfiguration (Conf) des Objekts (700) enthält;
- eine Vorrichtung (630) zum Empfangen von Steuerdaten ($D_C$) aus der Datenbank (500), wobei die Steuerdaten ($D_C$) durch das robotisierte System (10) verwertbar sind, um den Greifer (300) zu steuern, um das Objekt (700) optimal aufzunehmen, wobei die Steuerdaten ($D_C$) durch ein Erzeugungsverfahren nach einem der Ansprüche 1 bis 9 erzeugt werden.

**Claims**

**1.** A data generation method for controlling a gripper (300) of a robotic system (10), the gripper (300) containing a support (310) and at least two fingers (322, 323) which can be moved relative to the support (310) to take an object (700), the method comprising:

- a step (E' 1) of collecting base data ($D_B$) for a limited number of ways of taking the object (700) carried out by a human being;
- a first generation step (E'2) of generating additional data ($D_S$) from the base data ($D_B$), the first generation step (E'2) being carried out by a first variational auto-encoder (HGG VAE);
- a step (E'3) of sorting the base data ($D_B$) and the additional data ($D_S$) to constitute a set of sorted data ($D_T$), the sorting step (E'3) being carried out on the basis of a quality criterion of the taking of the object ($Q_{MSV}$);
- a second step (E'4) of generating data for generating the control data ($D_C$) from the sorted state ($D_T$), the second generation step (E'4) being carried out by a second variational auto-encoder (QGG VAE).

**2.** The generation method according to claim 1, wherein the base data ($D_B$), the additional data ($D_S$), the sorted data ($D_T$) and the control data ($D_C$) comprise a plurality of parameters, the parameters being selected from a list of parameters comprising:

- position parameters ($X''_{O'}$, $Y''_{O'}$, $Z''_{O'}$);
- orientation parameters ($\alpha$, $\beta$, $\gamma$, $\theta$; $q_x$, $q_y$, $q_z$, $q_w$);
- a configuration (Conf) of the object (700) for the taking thereof (a, b, c, d).

3. The generation method according to any one of claim 1 or claim 2, wherein the quality criterion of the taking of the object ($Q_{MSV}$) is a function of geometric characteristics of points of contact between the gripper (300) and the object (700).

4. The generation method according to any one of claims 1 to 3, wherein the sorting step (E'3) is carried out by a simulator which is adapted to generate a kinematics of the gripper (30) of the robotic system (10) and the collisions of this gripper (300) with the object (700), the simulator being capable of providing qualities of the taking of the object ($Q_{MSV}$) for the base data ($D_B$) and the additional data ($D_S$).

5. The generation method according to claim 4, wherein the set of sorted data ($D_T$) are associated with methods of taking the object (700) complying with the following conditions;

   - there is no collision with the table (800);
   - the object (700) is successfully raised from the table (800);
   - the quality of the taking of the object ($Q_{MSV}$) is greater than 0.

6. The generation method according to any one of claims 1 to 5, wherein the first variational auto-encoder (HGG VAE) and the second variational auto-encoder (QGG VAE) each comprise an encoder (910), a decoder (940) and a cost function and in that a Kullback-Leibler divergence is added to the cost function.

7. The generation method according to any one of claims 1 to 6, wherein the quantity of base data ($D_B$) collected is dependent on the complexity of the object (700).

8. The generation method according to any one of claims 1 to 7, wherein the gripper (300) has a plurality of articulations, the gripper (300) comprises a number of actuators lower than the number of degrees of freedom permitted by the articulations.

9. The generation method according to any one of claims 1 to 8, wherein the control data ($D_C$) are stored in a database (500), the database (500) being accessible for the control of the gripper (300) of the robotic system (10).

10. A method for controlling a gripper (300) of a robotic system (10), the gripper (300) comprising a support (310) and at least two fingers (322, 323) which can be moved relative to the support (310) to take an object (700), the method comprising:

    - a step (E1) of determining the positioning configuration (Conf) of the object (700);
    - a step (E2) of selecting, in a database (500), control data ($D_C$) as a function of the positioning configuration (Conf) of the object (700), the control data ($D_C$) being able to be used by the robotic system (10) to control the gripper (30) to take the object (700) in an optimum manner, the control data ($D_C$) being generated by a generation method according to any one of claims 1 to 9.

11. A robotic system with a gripper (300), the gripper (300) comprising a support (310) and at least two fingers (322, 323) which can be moved relative to the support (310) to take an object (700), the robotic system (10) comprising:

    - a device (610) for determining the positioning configuration (Conf) of the object (700);
    - a device (620) for sending, to a database (500), a request (Req (Conf)) for obtaining control data ($D_C$), the request (Req (Conf)) containing a piece of information relating to the positioning configuration (Conf) of the object (700);
    - a device (630) for receiving control data ($D_C$) originating from the database (500), the control data ($D_C$) being able to be used by the robotic system (10) in order to control the gripper (300) to take the object (700) in an optimum manner, the control data ($D_C$) being generated by a generation method according to any one of claims 1 to 9.

Figure 1

Figure 2

Figure 3

Figure 4

Figure 5

Figure 6

Figure 7

Figure 8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2019105637 A

**Littérature non-brevet citée dans la description**

- **C.D. SANTINA ; V. ARAPI ; G.AVERTA ; F. DAMIANI ; G. FIORE ; A. SETTIMI ; M. G. CATALANO ; D. BACCIU ; A. BICCHI ; M. BIANCHI.** Learning from humans how to grasp : A data-driven architecture for autonomous grasping with anthropomorphic soft hands. *IEEE Robotics and Automation Letters,* 2019, vol. 4 (2), 1533-1540
- 6-DOF Grasping for Target-driven Object Manipulation in Clutter. **MURALI ADITHYAVAIRAVAN et al.** 2020 IEEE INTERNATIONAL CONFERENCE ON ROBOTICS AND AUTOMATION (ICRA). IEEE, 31 Mai 2020, 6232-6238
- IRIS: Implicit Reinforcement without Interaction at Scale for Learning Control from Offline Robot Manipulation Data. **MANDLEKAR AJAY et al.** 2020 IEEE INTERNATIONAL CONFERENCE ON ROBOTICS AND AUTOMATION (ICRA). IEEE, 31 Mai 2020, 4414-4420
- **N. KOENIG ; A. HOWARD.** Design ans use paradigms for gazebo, an open-source multi-robot simulator. *IEEE/RSJ International Conférence on Intelligent Robots and Systems (IROS),* 2004, vol. 3, 2149-2154
- **BIRGLEN, LIONEL ; LALIBERTÉ, THIERRY ; GOSSELIN, CLÉMENT M.** *Underactuated Robotic Hands*